(19) Europäisches Patentamt
European Patent Office
Office européen des brevets

(11) **EP 1 550 237 B1**

(12) **EUROPEAN PATENT SPECIFICATION**

(45) Date of publication and mention
of the grant of the patent:
**28.11.2007 Bulletin 2007/48**

(21) Application number: **03776223.4**

(22) Date of filing: **02.10.2003**

(51) Int Cl.:
**H04B 7/005** (2006.01)

(86) International application number:
**PCT/US2003/031327**

(87) International publication number:
**WO 2004/032531 (15.04.2004 Gazette 2004/16)**

(54) **DETERMINATION OF CODE TRANSMIT POWER RANGE IN DOWNLINK POWER CONTROL FOR CELLULAR SYSTEMS**

BESTIMMUNG DES KODESENDELEISTUNGSBEREICHES BEI DER ABWÄRTSSTRECKEN-LEISTUNGSREGELUNG FÜR ZELLULARE SYSTEME

DETERMINATION D'UNE PLAGE DE PUISSANCE DE TRANSMISSION DE CODE DANS UN CONTROLE DE PUISSANCE AVAL POUR SYSTEMES CELLULAIRES

(84) Designated Contracting States:
**AT BE BG CH CY CZ DE DK EE ES FI FR GB GR HU IE IT LI LU MC NL PT RO SE SI SK TR**

(30) Priority: **03.10.2002 US 415938 P**

(43) Date of publication of application:
**06.07.2005 Bulletin 2005/27**

(60) Divisional application:
**07116169.9**

(73) Proprietor: **INTERDIGITAL TECHNOLOGY CORPORATION**
**Wilmington, DE 19801 (US)**

(72) Inventor: **ZHANG, Guodong**
**Farmingdale, NY 11735 (US)**

(74) Representative: **Pierrou, Mattias et al**
**Awapatent AB**
**P.O. Box 45 086**
**104 30 Stockholm (SE)**

(56) References cited:
**US-A1- 2003 076 790      US-A1- 2003 124 983**
**US-A1- 2004 095 904**

**Description**

FIELD OF THE INVENTION

This invention generally relates to cellular networks and more particularly to determination of code transmit power for use in power control.

BACKGROUND OF THE INVENTION

For a Universal Mobile Telecommunication System (UMTS) system, in the downlink there are a plurality of different codes transmitted for a plurality of different coded Composite Transport Channels (CCTrCHs) transmitting. Each CCTrCH is power controlled independently. At the receiver of the UE (a RAKE receiver is used for frequency division duplex (FDD), a multi-user detector (MUD) receiver is used for time division duplex (TDD)), the difference between the transmit power of two codes in the same cell has to be within a certain range to assure that the receiver works properly. The maximum allowed difference is called the dynamic range of the receiver. Because the total transmit power (i.e., carrier power) in the downlink is limited, an appropriate range of transmit power for each code should be determined to allow the power control to adjust the difference of code transmit powers to be in the dynamic range as much as possible. US 2003/0124983 discloses a conventional CDMA power control system.

Currently, there is no known convenient algorithm to determine the range of transmit power for each code in the downlink. The consequence of this is that the transmit power of one code can be increased to a very high value by the power control, which makes it difficult for the transmit power of other codes to catch up with the dynamic range due to the limit of Node B total transmitter power.

It is desirable to provide a method for determining the range of transmit power in the downlink, preferably in the form of an algorithm.

SUMMARY OF THE INVENTION

The invention provides a method and apparatus employing an algorithm for determining the range of transmit power for each code in the downlink properly for all modes of UMTS systems (including FDD, high chip rate (HCR) TDD, and low chip rate (LCR) TDD). In a preferred embodiment, the invention provides details of the preferred implementation. While the following description makes reference to downlink power control for CDMA systems as an example, it is to be noted that the invention is applicable for uplink power control and is also usable in cellular systems other than those mentioned above.

BRIEF DESCRIPTION OF THE DRAWINGS

A more detailed understanding of the invention may be had from the following description of preferred embodiments, given by way of example and to be understood in conjunction with the accompanying drawing wherein:

Figure 1 illustrates diagrammatically a first embodiment in the form of a flow chart for determination of code transmit power range in downlink; and

Figure 2 illustrates diagrammatically a second embodiment in the form of a flow chart.

The following acronyms are used in the present application:

| | |
|---|---|
| AWGN | additive white Gaussian noise |
| BLER | block error rate |
| CCTrCH | coded composite transport channel |
| CDMA | code-division multiple access |
| CRNC | controlling RNC |
| DR | dynamic range |
| FDD | frequency-division duplex |
| HCR | high chip rate |
| LCR | low chip rate |
| MUD | multi-user detector |
| RNC | radio network controller |
| SIR | signal to interference ratio |
| TDD | time-division duplex |
| UE | user equipment |
| UMTS | universal mobile telecommunications system |

DETAILED DESCRIPTION OF PREFERRED EMBODIMENTS

Described hereinafter are a method and apparatus employing algorithms in one of the first and second embodiments for determination of code transmit power for downlink power control in cellular networks. The transmit power range lies between the upper bound and lower bound of the transmit power of a particular code. The method of the present invention determines an appropriate transmit power range (especially the upper bound) for each code so that when the transmit power of any code approaches its upper bound, the transmit power of other codes can be adjusted to stay within the dynamic range.

The solution of two present inventions determines the range of code transmit power using at least some of the following parameters: 1) number of codes in the downlink (time slot, if TDD); 2) the range of the SIR target of the code; 3) the maximum allowed dynamic range of the receiver used at the UE (dynamic power range of the receiver is the maximum allowed difference between transmit power of any codes); 4) average MUD efficiency factor in the downlink (for TDD only); 5) average orthogonal factor in the downlink (for FDD only); 6) average inter-cell to intra-cell interference ratio.

The inventive method permits cellular networks to determine the dynamic range of code transmit power in the downlink power control. In particular, it is applicable to all modes of UMTS systems (including FDD, HCR TDD, and LCR TDD).

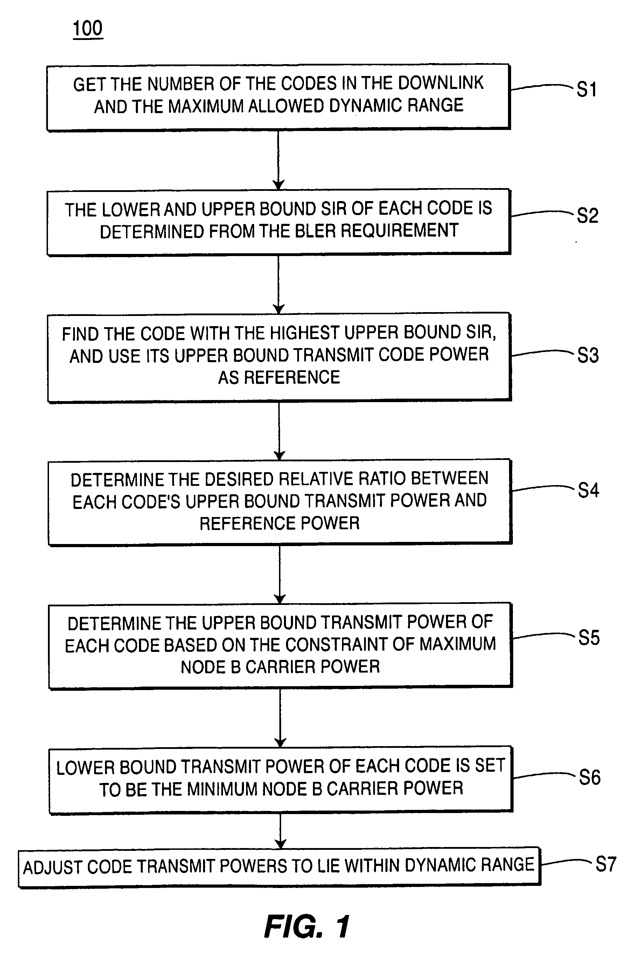

The method 100 of the first embodiment, shown in Figure 1, uses the following information to determine the range of code transmit-power:

The number of codes in the downlink (time slot, if TDD), denoted by $N$, at step S1 is obtained;

The range of the SIR target of the code $i$: the lower bound $SIR_{1b}(i)$ and upper bound $SIR_{ub}(i)$, is then obtained (step S2). The range is determined by the C-RNC from the BLER requirement of service and possible propagation conditions. For example, the upper bound is the SIR target corresponding to the SIR in the worst case (known as case 1 in the technical literature) and the lower bound is the SIR target corresponding to the best case (known as the AWGN case in the technical literature); and

The maximum allowed dynamic range of the receiver used at the UE is $DR$, the value of which depends on the design of the receiver. Therefore, $DR$ is a design parameter that can be configured by the operator.

The code transmit power range is determined as follows. First, among all the codes, the code with maximum upper bound SIR target, say code $j$, is selected (step S3). The upper bound of the transmit power of code i is denoted by $TXCode_{ub}(i)$ which is used as a reference. The relationship between the upper bound of code transmit power of code $i$ and code $j$ (the code with maximum upper bound SIR target), obtained at step S4, is expressed as:

$$TXCode_{ub}(i) = R(i) \cdot TXCode_{ub}(j) \qquad \text{Equation 1}$$

where $R(i)$, the desired ratio between $TXCode_{ub}(i)$ and $TXCode_{ub}(j)$, is

$$R(i) = \begin{cases} \dfrac{SIR_{ub}(i)}{SIR_{ub}(j)} & if \ \dfrac{SIR_{ub}(j)}{SIR_{ub}(i)} \leq DR \\ \dfrac{1}{DR} & if \ \dfrac{SIR_{ub}(j)}{SIR_{ub}(i)} > DR \end{cases} \qquad \text{Equation 2}$$

The sum of upper bound of code transmit power is subject to the limit of maximum Node B carrier power, $CATX_{max}$, (step S5). For system stability purposes, a margin is used to prevent the total code transmit-power to reach the maximum allowed value. The margin, a design parameter, can be configured by the operator as:

$$\sum_{i=1}^{N} TXCode_{ub}(i) = CATX_{max} / Margin \qquad \text{Equation 3}$$

Therefore, the upper bound of the transmit power of code i is given by

$$TXCode_{ub}(i) = \frac{R(i)}{\sum_{i=1}^{N} R(i)} \left(CATX_{max} / Margin\right) \qquad \text{Equation 4}$$

The lower bound of code transmit power, obtained at step S6, is set to the minimum allowed carrier power of the Node B.
$$TXCode_{lb}(i) = CATX_{min} \qquad \text{Equation 5}$$

The code transmit powers are then adjusted to lie within the dynamic range (step S7). The method 100 will configure or reconfigure the range of code transmit power whenever the number of codes in the downlink changes, which includes: radio link setup for a new CCTrCH and radio link release for an existing CCTrCH. Accordingly, the method 100 is suitable for a real-time services scenario, where the number of codes changes relatively slowly.

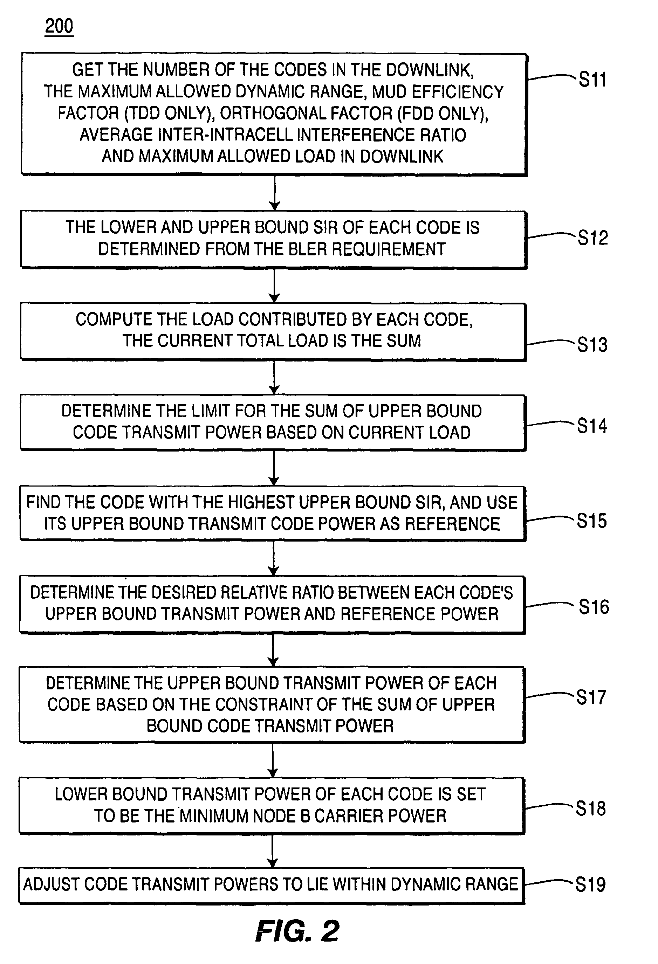

A second embodiment of a method 200 in accordance with the present invention, shown in Figure 2, uses the following information to determine the range of code transmit power: 1) the number of codes in the downlink (time slot, if TDD), denoted by $N$ ; 2) the range of SIR target of the code $i$: the lower bound $SIR_{lb}(i)$ and upper bound $SIR_{ub}(i)$ which are determined from the BLER requirement; 3) the maximum allowed dynamic range of receiver used at the UE, $DR$ ; 4) average MUD efficiency factor in the downlink (for TDD only), $\alpha$; 5) average orthogonal factor in the downlink (for FDD only), $\alpha$ ; 6) average inter-cell to intra-cell interference ratio, $\eta$; and 7) maximum allowed load in the downlink, $Load_{max}$. This is a design parameter that can be configured by the operator and executed by the call admission control function. These data are obtained at steps S11 and S12.

Code transmit power range is then determined as follows: The current load in the downlink (time slot, if TDD) is computed (S13). Among all the codes, the code with maximum upper bound SIR target, say code $j$, is selected (step S14).

The load contributed by each code $i$ is given by:
$$Load(i) = (1 - \alpha + \eta) \cdot SIR_{ub}(i) \text{, if } \frac{SIR_{ub}(j)}{SIR_{ub}(i)} \le DR \qquad , \qquad \text{Equation 6}$$

$$Load(i) = (1 - \alpha + \eta) \cdot (SIR_{ub}(j) / DR) \text{, if } \frac{SIR_{ub}(j)}{SIR_{ub}(i)} > DR. \qquad \text{Equation 7}$$

Therefore, the total load is given by:
$$Load = \sum_{i=1}^{N} Load(i) \qquad \text{Equation 8}$$

The load in the downlink is controlled by the call admission control function to be no more than the maximum allowed load in the downlink, $Load_{max}$. The limit for the sum of code transmit power upper bounds, obtained at step S14, is set to be proportional to the current load. That is:
$$\sum_{i=1}^{N} TXCode_{ub}(i) = CATX'_{max} / Margin \text{, where} \qquad \text{Equation 9}$$

$$CATX'_{max} = \frac{Load}{Load_{max}} \cdot CATX_{max} \qquad \text{Equation 10}$$

The upper bound of the transmit power of code $i$ is $TXCode_{ub}(i)$. The relationship between the upper bound of code transmit power of code $i$ and code $j$ (the code with the maximum upper bound SIR target, obtained at step S15), is expressed as:
$$TXCode_{ub}(i) = R(i) \cdot TXCode_{ub}(j) \qquad \text{Equation 11}$$

Where $R(i)$, the desired ratio between $TXCode_{ub}(i)$ and $TXCode_{ub}(j)$, (obtained at step S16), is:
$$R(i) = \begin{cases} \dfrac{SIR_{ub}(i)}{SIR_{ub}(j)} & if \;\; \dfrac{SIR_{ub}(j)}{SIR_{ub}(i)} \le DR \\[2mm] \dfrac{1}{DR} & if \;\; \dfrac{SIR_{ub}(j)}{SIR_{ub}(i)} > DR \end{cases} \qquad \text{Equation 12}$$

Therefore, the upper bound of transmit power of code $i$, (obtained at step S17), is given by:
$$TXCode_{ub}(i) = \frac{R(i)}{\sum_{i=1}^{N} R(i)} \left( CATX'_{max} / Margin \right) \qquad \text{Equation 13}$$

Utilizing equation 12 in equations 6-8, the result is:
$$Load = (1 - \alpha + \eta) \cdot SIR_{ub}(j) \cdot \sum_{i=1}^{N} R(i) \qquad \text{Equation 14}$$

Likewise, utilizing equation 14 in equation 10 provides:
$$CATX'_{max} = \frac{(1 - \alpha + \eta) \cdot SIR_{ub}(j) \cdot \sum_{i=1}^{N} R(i)}{Load_{max}} \cdot CATX_{max} \qquad \text{Equation 15}$$

Finally, utilizing 15 in equation 13 yields:
$$TXCode_{ub}(i) = \frac{(1-\alpha+\eta)\cdot R(i)\cdot SIR(j)}{Load_{max}} \cdot \frac{CATX_{max}}{Margin} \qquad \text{Equation 16}$$

The lower bound of the code transmit power (obtained at step S18), is set to be the minimum allowed carrier power of the Node B as:
$$TXCode_{lb}(i) = CATX_{min} \qquad \text{Equation 17}$$

The code transmit powers are then adjusted to lie within the dynamic range (step S19).

The method 200 shown in Figure 2 does not necessarily need to configure or reconfigure the range of code transmit power when the number of codes in the downlink changes. As shown in equation 16, the transmit power range for a code is determined by its SIR upper bound and maximum SIR upper bound of codes in the downlink (time slot, if TDD). As long as the maximum SIR upper bound of codes in the downlink (time slot, if TDD) does not change the value of $R(i) \cdot SIR_{ub}(j)$, the range of code transmit power will not change. As a result, the frequency of reconfiguration of the code transmit power range is much less than the frequency at which the number of codes changes. Therefore, this algorithm is suitable for a non-real-time services scenario, where the number of codes changes quickly. In addition, it is also suitable for a real-time services scenario as well.

The flow diagram of Figure 1 shows the preferred sequence of operations for implementing the first algorithm. Initially, the number of the codes in the downlink and the maximum allowed dynamic range are obtained, followed by steps which operate on the data obtained to achieve the desired result. However, the steps may be altered in sequence without departing from the scope of the invention.

The flow diagram of Figure 2 shows the preferred sequence of operations for implementing the second algorithm. The process initially obtains the number of codes in the downlink, the maximum allowed dynamic range, MUD efficiency factor (as applied to TDD only), orthogonal factor (as applied to FDD only), average inter-intracell interference ratio, and maximum allowed load in downlink, followed by operations on these data to achieve the desired result. Here too, the steps may be altered in sequence without departing from the scope of the invention.

Even though the above description makes reference to FDD and TDD systems as examples, the invention for downlink power control is applicable to other types of communication systems as well.

**Claims**

1. A method (100; 200) for determining code transmit power, comprising:

   a) obtaining (S1; S11) a number of codes in a downlink and a maximum allowed dynamic range of a receiver;
   b) determining (S2; S12) a lower bound and an upper bound signal-to-interference ratio (SIR) target of each code based on a block error rate (BLER) requirement;
   c) determining (S3; S15) a code with maximum upper bound SIR target and establishing its upper bound transmit power as a reference;
   d) determining (S4; S16) a desired relative ratio between each code upper bound transmit power and the reference based on the maximum allowed dynamic range;
   e) determining (S5; S17) an upper bound transmit power of each code based on a constraint of the sum of the upper bound code transmit power and based on the desired relative ratio; and
   f) setting (S6; S18) a lower bound transmit power for each code at a minimum Node B carrier power.

2. The method of claim 1, wherein the upper bound transmit power is determined based on the constraint of a maximum Node B carrier power using a margin, to prevent the total code transmit-power to reach the maximum Node B carrier power.

**3.** The method of claim 1, wherein step (b) further includes selecting an SIR target corresponding to an SIR in a worst case as the upper bound.

**4.** The method of claim 1, wherein step (b) further includes selecting an SIR target corresponding to an SIR in a best case as the lower bound.

**5.** The method of any one of the preceding claims, further comprising the step of adjusting (S7; S19) code transmit power to lie within the allowed dynamic range.

**6.** The method of claim 1, further comprising:

computing a load contributed by each code;
summing the load to obtain a current total load; and
determining a limit for the sum of the upper bound code transmit power based on the current total load.

**7.** The method of claim 6, wherein the load contributed by each code is computed based on inter-cell to intra-cell interference ratio.

**8.** The method of claim 7, wherein the load is computed based also on an average multi-user detector efficiency factor in the downlink for a time division duplex communication system.

**9.** The method of claim 7, wherein the load is computed based also on an average orthogonal factor in the downlink for a frequency division duplex communication system.

**10.** Apparatus for determining code transmit power, comprising:

means for obtaining a number of codes in a downlink and a maximum allowed dynamic range of a receiver;
means for determining a lower bound and an upper bound signal-to-interference ratio (SIR) target of each code based on a block error rate (BLER) requirement;
means for determining a code with maximum upper bound SIR target and establishing its upper bound transmit power as a reference;
means for determining a desired relative ratio between each code upper bound transmit power and the reference based on the maximum allowed dynamic range;
means for determining an upper bound transmit power of each code based on a constraint of the sum of the upper bound code transmit power and based on the desired relative ratio; and
means for setting a lower bound transmit power for each code at a minimum Node B carrier power.

**11.** The apparatus of claim 10, further comprising means for determining the upper bound transmit power based on the constraint of a maximum Node B carrier power using a margin, to prevent the total code transmit-power to reach the maximum Node B carrier power.

**12.** The apparatus of claim 10 or 11, further comprising means for adjusting code transmit power to lie within the allowed dynamic range.

**13.** The apparatus of claim 10, further comprising:

means for computing a load contributed by each code;
means for summing the load to obtain a current total load; and
means for determining a limit for the sum of the upper bound code transmit power based on the current total load.

**Patentansprüche**

**1.** Verfahren (100; 200) zur Bestimmung von Kodesendeleistung, das aufweist:

a) Erhalten (S1 S11) einer Anzahl von Kodes auf einer Abwärtsstrecke und eines maximal zulässigen Dynamikbereichs eines Empfängers;
b) Bestimmen (S2; S12) einer unteren Grenze und einer oberen Grenze für das Signal-Rausch-Verhältnisziel (SIR-Ziel) jedes Kodes basierend auf einer Blockfehlerratenanforderung (BLER-Anforderung);

c) Bestimmen (S3; S15) eines Kodes mit maximalem oberem Grenz-SIR-Ziel und Einführen seiner Obergrenze für die Sendeleistung als eine Referenz;

d) Bestimmen (S4; S16) eines erwünschten relativen Verhältnisses zwischen der oberen Sendeleistungsgrenze jedes Kodes und der Referenz basierend auf dem maximal zulässigen Dynamikbereich;

e) Bestimmen (S5; S17) einer oberen Sendeleistungsgrenze jedes Kodes basierend auf einer Nebenbedingung für die Summe der oberen Grenze für die Kodesendeleistung und basierend auf dem erwünschten relativen Verhältnis; und

f) Festlegen (S6; S18) einer unteren Sendeleistungsgrenze für jeden Kode auf eine minimale Node-B-Trägerleistung.

2. Verfahren nach Anspruch 1, wobei die obere Sendeleistungsgrenze basierend auf der Nebenbedingung einer maximalen Node-B-Trägerleistung unter Verwendung einer Spanne bestimmt wird, um zu verhindern, daß die Gesamtkodesendeleistung die maximale Node-B-Trägerleistung erreicht.

3. Verfahren nach Anspruch 1, wobei der Schritt (b) ferner das Auswählen eines SIR-Ziels, welches einem SIR in einem ungünstigsten Fall entspricht, als die obere Grenze umfaßt.

4. Verfahren nach Anspruch 1, wobei der Schritt (b) ferner das Auswählen eines SIR-Ziels, welches einem SIR in einem günstigsten Fall entspricht, als die untere Grenze umfaßt.

5. Verfahren nach einem der vorangehenden Ansprüche, das ferner den Schritt des Anpassens (S7; S19) der Kodesendeleistung derart aufweist, daß sie innerhalb des zulässigen Dynamikbereichs liegt.

6. Verfahren nach Anspruch 1, das ferner aufweist:

   Berechnen einer von jedem Kode beigetragenen Last;
   Summieren der Last, um eine aktuelle Gesamtlast zu erhalten; und
   Bestimmen einer Grenze für die Summe der oberen Grenze der Kodesendeleistung basierend auf der aktuellen Gesamtlast.

7. Verfahren nach Anspruch 6, wobei die von jedem Kode beigetragene Last basierend auf dem Verhältnis von Interzellen- zu Intrazellen-Interferenz berechnet wird.

8. Verfahren nach Anspruch 7, wobei die Last auch basierend auf einem mittleren Mehrbenutzerdetektor-Wirkungsgradfaktor auf der Abwärtsstrecke für ein Zeitteilungsduplex-Kommunikationssystem berechnet wird.

9. Verfahren nach Anspruch 7, wobei die Last auch basierend auf einem mittleren orthogonalen Faktor auf der Abwärtsstrecke für ein Frequenzteilungsduplex-Kommunikationssystem berechnet wird.

10. Vorrichtung zur Bestimmung der Kodesendeleistung, die aufweist:

   eine Einrichtung zum Erhalten einer Anzahl von Kodes auf einer Abwärtsstrecke und eines maximal zulässigen Dynamikbereichs eines Empfängers;
   eine Einrichtung zum Bestimmen einer unteren Grenze und einer oberen Grenze für das Signal-Rausch-Verhältnisziel (SIR-Ziel) jedes Kodes basierend auf einer Blockfehlerratenanforderung (BLER-Anforderung);
   eine Einrichtung zum Bestimmen eines Kodes mit maximalem oberem Grenz-SIR-Ziel und Einführen seiner Obergrenze für die Sendeleistung als eine Referenz;
   eine Einrichtung zum Bestimmen eines erwünschten relativen Verhältnisses zwischen der oberen Sendeleistungsgrenze jedes Kodes und der Referenz basierend auf dem maximal zulässigen Dynamikbereich;
   eine Einrichtung zum Bestimmen einer oberen Sendeleistungsgrenze jedes Kodes basierend auf einer Nebenbedingung für die Summe der oberen Grenze für die Kodesendeleistung und basierend auf dem erwünschten relativen Verhältnis; und
   eine Einrichtung zum Festlegen einer unteren Sendeleistungsgrenze für jeden Kode auf eine minimale Node-B-Trägerleistung.

11. Vorrichtung nach Anspruch 10, die ferner eine Einrichtung zum Bestimmen der oberen Sendeleistungsgrenze basierend auf der Nebenbedingung einer maximalen Node-B-Trägerleistung unter Verwendung einer Spanne bestimmt, um zu verhindern, daß die Gesamtkodesendeleistung die maximale Node-B-Trägerleistung erreicht.

**12.** Vorrichtung nach Anspruch 10 oder 11, die ferner eine Einrichtung zum Anpassen der Kodesendeleistung aufweist, so daß sie innerhalb des zulässigen Dynamikbereichs liegt.

**13.** Vorrichtung nach Anspruch 10, die ferner aufweist:

eine Einrichtung zum Berechnen einer von jedem Kode beigetragenen Last;
eine Einrichtung zum Summieren der Last, um eine aktuelle Gesamtlast zu erhalten; und
eine Einrichtung zum Bestimmen einer Grenze für die Summe der oberen Grenze der Kodesendeleistung basierend auf der aktuellen Gesamtlast.

**Revendications**

**1.** Procédé (100 ; 200) destiné à déterminer une puissance de transmission de code, comprenant :

a) l'obtention (S1 ; S11) d'un certain nombre de codes dans une liaison descendante et d'une gamme dynamique maximale autorisée d'un récepteur ;
b) la détermination (S2 ; S12) d'un objectif de rapport signal utile/signal brouilleur (SIR) à limitation inférieure et à limitation supérieure de chaque code sur la base d'une exigence de taux d'erreurs sur les blocs (BLER) ;
c) la détermination (S3 ; S15) d'un code avec un objectif de rapport signal utile/signal brouilleur à limitation supérieure maximal et l'établissement de sa puissance de transmission à limitation supérieure en tant que référence ;
d) la détermination (S4 ; S16) d'un rapport relatif souhaité entre chaque puissance de transmission à limitation supérieure de code et la référence sur la base de la gamme dynamique maximale autorisée ;
e) la détermination (S5 ; S17) d'une puissance de transmission à limitation supérieure de chaque code sur la base d'une contrainte de la somme de la puissance de transmission de code à limitation supérieure et sur la base du rapport relatif souhaité ; et
f) la fixation (S6 ; S18) d'une puissance de transmission à limitation inférieure pour chaque code au niveau d'une puissance d'onde porteuse au noeud B minimale.

**2.** Procédé selon la revendication 1, dans lequel la puissance de transmission à limitation supérieure est déterminée sur la base de la contrainte d'une puissance d'onde porteuse au noeud B maximale en utilisant une marge, pour empêcher la puissance de transmission de code totale d'atteindre la puissance d'onde porteuse au noeud B maximale.

**3.** Procédé selon la revendication 1, dans lequel l'étape (b) comprend en outre la sélection d'un objectif de rapport signal utile/signal brouilleur correspondant à un rapport signal utile/signal brouilleur dans le pire des cas en tant que limitation supérieure.

**4.** Procédé selon la revendication 1, dans lequel l'étape (b) comprend en outre la sélection d'un objectif de rapport signal utile/signal brouilleur (SIR) correspondant à un rapport signal utile/signal brouilleur (SIR) dans le meilleur des cas en tant que limitation inférieure.

**5.** Procédé selon l'une quelconque des revendications précédentes, comprenant en outre l'étape consistant à ajuster (S7 ; S19) la puissance de transmission de code pour qu'elle se situe dans la gamme dynamique autorisée.

**6.** Procédé selon la revendication 1, comprenant en outre :

le calcul d'une charge à laquelle contribue chaque code ;
la somme de la charge pour obtenir une charge totale actuelle ; et
la détermination d'une limite pour la somme de la puissance de transmission de code à limitation supérieure sur la base de la charge totale actuelle.

**7.** Procédé selon la revendication 6, dans lequel la charge à laquelle contribue chaque code est calculée sur la base d'un rapport de brouillage intercellulaire/intracellulaire.

**8.** Procédé selon la revendication 7, dans lequel la charge est calculée également sur la base d'un facteur de rendement de détecteur multi utilisateur moyen dans la liaison descendante pour un système de communication à duplexage par répartition dans le temps.

**9.** Procédé selon la revendication 7, dans lequel la charge est calculée également sur la base d'un facteur orthogonal moyen dans la liaison descendante pour un système de communication à duplexage par répartition en fréquence.

**10.** Appareil destiné à déterminer une puissance de transmission de code, comprenant :

un moyen destiné à obtenir un certain nombre de codes dans une liaison descendante et une gamme dynamique maximale autorisée d'un récepteur ;
un moyen destiné à déterminer un objectif de rapport signal utile/signal brouilleur (SIR) à limitation inférieure et à limitation supérieure de chaque code sur la base d'une exigence de taux d'erreurs sur les blocs (BLER) ;
un moyen destiné à déterminer un code avec un objectif de rapport signal utile/signal brouilleur à limitation supérieure maximal et à établir sa puissance de transmission à limitation supérieure en tant que référence ;
un moyen destiné à déterminer un rapport relatif souhaité entre chaque puissance de transmission à limitation supérieure de code et la référence sur la base de la gamme dynamique maximale autorisée ;
un moyen destiné à déterminer une puissance de transmission à limitation supérieure de chaque code sur la base d'une contrainte de la somme de la puissance de transmission de code à limitation supérieure et sur la base du rapport relatif souhaité ; et
un moyen destiné à fixer une puissance de transmission à limitation inférieure pour chaque code au niveau d'une puissance d'onde porteuse au noeud B minimale.

**11.** Appareil selon la revendication 10, comprenant en outre un moyen destiné à déterminer la puissance de transmission à limitation supérieure sur la base de la contrainte d'une puissance d'onde porteuse au noeud B maximale en utilisant une marge, pour empêcher la puissance de transmission de code totale d'atteindre la puissance d'onde porteuse au noeud B maximale.

**12.** Appareil selon la revendication 10 ou 11, comprenant en outre un moyen destiné à ajuster la puissance de transmission de code pour qu'elle se situe dans la gamme dynamique autorisée.

**13.** Appareil selon la revendication 10, comprenant en outre :

un moyen destiné à calculer une charge à laquelle contribue chaque code ;
un moyen destiné à faire la somme de la charge pour obtenir une charge totale actuelle ; et
un moyen destiné à déterminer une limite pour la somme de la puissance de transmission de code à limitation supérieure sur la base de la charge totale actuelle.

100

```
┌─────────────────────────────────────────────────┐
│  GET THE NUMBER OF THE CODES IN THE DOWNLINK      │──── S1
│  AND THE MAXIMUM ALLOWED DYNAMIC RANGE            │
└─────────────────────────────────────────────────┘
                        │
                        ▼
┌─────────────────────────────────────────────────┐
│  THE LOWER AND UPPER BOUND SIR OF EACH CODE IS    │──── S2
│  DETERMINED FROM THE BLER REQUIREMENT             │
└─────────────────────────────────────────────────┘
                        │
                        ▼
┌─────────────────────────────────────────────────┐
│  FIND THE CODE WITH THE HIGHEST UPPER BOUND SIR,  │
│  AND USE ITS UPPER BOUND TRANSMIT CODE POWER      │──── S3
│  AS REFERENCE                                     │
└─────────────────────────────────────────────────┘
                        │
                        ▼
┌─────────────────────────────────────────────────┐
│  DETERMINE THE DESIRED RELATIVE RATIO BETWEEN     │
│  EACH CODE'S UPPER BOUND TRANSMIT POWER AND       │──── S4
│  REFERENCE POWER                                  │
└─────────────────────────────────────────────────┘
                        │
                        ▼
┌─────────────────────────────────────────────────┐
│  DETERMINE THE UPPER BOUND TRANSMIT POWER OF      │
│  EACH CODE BASED ON THE CONSTRAINT OF MAXIMUM     │──── S5
│  NODE B CARRIER POWER                             │
└─────────────────────────────────────────────────┘
                        │
                        ▼
┌─────────────────────────────────────────────────┐
│  LOWER BOUND TRANSMIT POWER OF EACH CODE IS SET   │──── S6
│  TO BE THE MINIMUM NODE B CARRIER POWER           │
└─────────────────────────────────────────────────┘
                        │
                        ▼
┌─────────────────────────────────────────────────┐
│ ADJUST CODE TRANSMIT POWERS TO LIE WITHIN DYNAMIC RANGE │──── S7
└─────────────────────────────────────────────────┘
```

*FIG. 1*

200

```
GET THE NUMBER OF THE CODES IN THE DOWNLINK,
THE MAXIMUM ALLOWED DYNAMIC RANGE, MUD EFFICIENCY
FACTOR (TDD ONLY), ORTHOGONAL FACTOR (FDD ONLY),
AVERAGE INTER-INTRACELL INTERFERENCE RATIO
AND MAXIMUM ALLOWED LOAD IN DOWNLINK
```
S11

$\downarrow$

```
THE LOWER AND UPPER BOUND SIR OF EACH CODE IS
DETERMINED FROM THE BLER REQUIREMENT
```
S12

$\downarrow$

```
COMPUTE THE LOAD CONTRIBUTED BY EACH CODE,
THE CURRENT TOTAL LOAD IS THE SUM
```
S13

$\downarrow$

```
DETERMINE THE LIMIT FOR THE SUM OF UPPER BOUND
CODE TRANSMIT POWER BASED ON CURRENT LOAD
```
S14

$\downarrow$

```
FIND THE CODE WITH THE HIGHEST UPPER BOUND SIR, AND USE
ITS UPPER BOUND TRANSMIT CODE POWER AS REFERENCE
```
S15

$\downarrow$

```
DETERMINE THE DESIRED RELATIVE RATIO BETWEEN EACH CODE'S
UPPER BOUND TRANSMIT POWER AND REFERENCE POWER
```
S16

$\downarrow$

```
DETERMINE THE UPPER BOUND TRANSMIT POWER OF EACH
CODE BASED ON THE CONSTRAINT OF THE SUM OF UPPER
BOUND CODE TRANSMIT POWER
```
S17

$\downarrow$

```
LOWER BOUND TRANSMIT POWER OF EACH CODE IS SET
TO BE THE MINIMUM NODE B CARRIER POWER
```
S18

$\downarrow$

```
ADJUST CODE TRANSMIT POWERS TO LIE WITHIN DYNAMIC RANGE
```
S19

*FIG. 2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030124983 A